# EUROPÄISCHE PATENTSCHRIFT

(11) **EP 3 606 794 B1**
(45) Veröffentlichungstag und Bekanntmachung des Hinweises auf die Patenterteilung: **13.10.2021**
(21) Anmeldenummer: 17716851.5
(22) Anmeldetag: 07.04.2017
(51) Int. Cl.: B60S 3/04

(54) **RADWASCHVORRICHTUNG UND VERFAHREN ZUM REINIGEN EINES RADES SOWIE FAHRZEUGWASCHANLAGE**
WHEEL WASHING APPARATUS AND METHOD FOR CLEANING A WHEEL AND ALSO VEHICLE WASHING SYSTEM
ARRANGEMENT DE LAVAGE DE ROUE ET PROCÉDÉ DE NETTOYAGE D'UNE ROUE AINSI QU'INSTALLATION DE LAVAGE POUR VÉHICULES

(43) Veröffentlichungstag der Anmeldung: 12.02.2020
(73) Patentinhaber: Alfred Kärcher SE & Co. KG, 71364 Winnenden (DE)
(72) Erfinder: HEID, Claus, 70186 Stuttgart (DE); DÖBELE, Johannes, 74394 Hessigheim (DE); HEINZE, Michael, 71282 Hemmingen (DE)
(74) Vertreter: Hoeger, Stellrecht & Partner Patentanwälte mbB
(86) Internationale Anmeldenummer: PCT/EP2017/058389
(87) Internationale Veröffentlichungsnummer: WO 2018/184691

(56) Entgegenhaltungen:
- EP-A1- 2 332 793
- CN-U- 205 854 100
- DE-U1-202008 012 139

## Beschreibung

Die Erfindung betrifft eine Radwaschvorrichtung zum Reinigen eines Rades eines Kraftfahrzeuges, umfassend eine Bürsteneinrichtung, die mindestens eine an das Rad anlegbare Bürste umfasst oder ausbildet, eine Antriebseinrichtung zum drehenden Antreiben der mindestens einen Bürste und eine Zustelleinrichtung, mit der die Bürsteneinrichtung von einer radfernen Ruhestellung in mindestens eine radnahe Gebrauchsstellung überführbar ist, wobei die Bürsteneinrichtung mittels der Zustelleinrichtung bei Bewegung in Richtung auf das Rad absenkbar ist.

Außerdem betrifft die vorliegende Erfindung ein Verfahren zum Reinigen eines Rades.

Weiter betrifft die vorliegende Erfindung eine Fahrzeugwaschanlage, umfassend mindestens eine Radwaschvorrichtung zum Reinigen eines Rades. Bei der Fahrzeugwaschanlage kann es sich um eine Portalwaschanlage handeln, die relativ zu einem stationären Fahrzeug verfährt. Alternativ kann die Fahrzeugwaschanlage eine Waschstraße sein, bei der das zu reinigende Fahrzeug mittels einer Fördereinrichtung bewegt wird.

Bei einer Radwaschvorrichtung der eingangs genannten Art kann die Bürsteneinrichtung von einer radfernen Ruhestellung mittels der Zustelleinrichtung in Richtung auf das Rad bewegt werden. In einer radnahen Gebrauchsstellung können Reinigungselemente der mindestens einen Bürste, insbesondere Reinigungsborsten, das Rad kontaktieren. Unter Antrieb durch die Antriebseinrichtung wird das Rad abgereinigt, insbesondere im Bereich der Felge. Anschliessend kann die Bürsteneinrichtung mittels der Zustelleinrichtung wieder von der Gebrauchsstellung in die Ruhestellung überführt werden.

Von wenigen Ausnahmen abgesehen (beispielsweise verhältnismäßig breite, aber flache Sportwagen), weisen Kraftfahrzeuge üblicherweise Räder umso größeren Durchmessers auf, je breiter die Kraftfahrzeuge sind. Dementsprechend sind Kleinwagen schmal und umfassen Räder eher geringen Durchmessers. Fahrzeuge der Kompaktklasse oder Mittelklasse sind breiter und umfassen im Verhältnis zu Kleinwagen Räder größeren Durchmessers. Fahrzeuge der Oberklasse, insbesondere auch große SUVs, sind noch breiter und umfassen Räder noch größeren Durchmessers. Aus diesem Grund ist es bekannt, die Bürsteneinrichtung mittels der Zustelleinrichtung beim Bewegen in Richtung auf das Rad abzusenken. Beispielsweise kann die Bürsteneinrichtung umso weiter abgesenkt werden, je schmaler das Kraftfahrzeug ist und umso geringer der Durchmesser von dessen Rädern. Umgekehrt wird die Bürsteneinrichtung weniger weit abgesenkt, wenn es sich um ein Kraftfahrzeug mit Rädern eher größeren Durchmessers handelt. Es versteht sich, dass vorliegend von einer korrekten Positionierung des Kraftfahrzeuges relativ zur Radwaschvorrichtung ausgegangen wird, insbesondere wenn zugleich mit zwei Radwaschvorrichtungen von beiden Seiten auf die Räder des Kraftfahrzeuges eingewirkt wird.

Eine Radwaschvorrichtung zum Reinigen eines Rades, bei der die Bürsteneinrichtung auf einer schiefen Ebene, im Verhältnis zu einer horizontalen Aufstellfläche für das Kraftfahrzeug, in Richtung auf das Rad abgesenkt wird, ist in der DE 1 655 989 beschrieben. Die DE 20 2008 012 139 U1 beschreibt ebenfalls eine Radwaschvorrichtung zum Reinigen eines Rades, bei der die Bürsteneinrichtung in einer schiefen Ebene bewegt wird und schräg in Richtung des Rades abgesenkt wird.

Die US 3,758,906 beschreibt eine Radwaschvorrichtung zum Reinigen eines Rades mit bei der Zustellbewegung absenkbarer Bürsteneinrichtung. Die Bürsteneinrichtung führt dabei eine Pendelbewegung mittels eines Gelenkparallelogrammes aus, so dass die Bürsteneinrichtung entlang einer konvexen Bahnkurve in Richtung auf das Rad abgesenkt wird.

Eine Radwaschvorrichtung mit einer in drei Raumrichtungen translatorisch bewegbaren Bürsteneinrichtung ist in der EP 2 332 793 A1 beschrieben.

Eine Bürsteneinrichtung mit einer Mehrzahl von Bürsten ist beispielsweise in der WO 2012/110094 A1 beschrieben.

Positions- und Orientierungsangaben wie beispielsweise "oben", "unten" beziehen sich vorliegend auf einen bestimmungsgemäßen Gebrauch der Radwaschvorrichtung zum Reinigen eines Rades, die mit einem auf einer Aufstellfläche positionierten Kraftfahrzeug zum Einsatz kommt. Die Aufstellfläche wird vorliegend als horizontal oder im Wesentlichen horizontal ausgerichtet angesehen. Idealerweise wird die Bürsteneinrichtung mittels der Zustelleinrichtung quer zu einer Längsrichtung des Kraftfahrzeuges bewegt, d.h. das Kraftfahrzeug ist relativ zur Radwaschvorrichtung vorzugsweise so ausgerichtet, dass die Längsrichtung des Kraftfahrzeuges quer und insbesondere senkrecht zu einer Ebene ausgerichtet ist, in der die Zustellbewegung der Bürsteneinrichtung erfolgt.

Aufgabe der vorliegenden Erfindung ist es, eine Radwaschvorrichtung, ein Verfahren zum Reinigen eines Rades eines Kraftfahrzeuges und eine Fahrzeugwaschanlage bereitzustellen, mit der bzw. dem ein besseres Reinigungsergebnis bei den zu reinigenden Kraftfahrzeugen erzielt werden kann.

Diese Aufgabe wird durch eine erfindungsgemäße Radwaschvorrichtung zum Reinigen eines Rades eines Kraftfahrzeuges gelöst, umfassend eine Bürsteneinrichtung, die mindestens eine an das Rad anlegbare Bürste umfasst oder ausbildet, eine Antriebseinrichtung zum drehenden Antreiben der mindestens einen Bürste und eine Zustelleinrichtung, mit der die Bürsteneinrichtung von einer radfernen Ruhestellung in mindestens eine radnahe Gebrauchsstellung überführbar ist, wobei die Bürsteneinrichtung mittels der Zustelleinrichtung bei einer Zustellbewegung in Richtung auf das Rad absenkbar ist, wobei die Bürsteneinrichtung mittels der Zustelleinrichtung bei Bewegung von der Ruhestellung in die mindestens eine Gebrauchsstellung entlang einer mindestens einen Wendepunkt aufweisenden Bahnkurve bewegbar ist und diese Bahnkurve bei der Zustellbewegung durchläuft.

Bei der erfindungsgemäßen Radwaschvorrichtung ist die Zustelleinrichtung so ausgebildet, dass die Bürsteneinrichtung während der Zustellbewegung eine Bahnkurve durchläuft, die mindestens einen Wendepunkt aufweist. Am Wendepunkt ändert sich die Krümmung der Bahnkurve. Die Zustellbewegung der Bürsteneinrichtung erfolgt daher, anders als in den eingangs genannten Druckschriften DE 1 655 989 und DE 20 2008 012 139 U1, nicht entlang einer durchgehend schrägen, geradlinigen Bewegung der Bürsteneinrichtung. Stattdessen ändert die Bürsteneinrichtung an zumindest einem Wendepunkt der Bahnkurve die Bewegungsrichtung zumindest einmal, wobei sich jedoch im Vergleich zur eingangs genannten US 3,758,906 die Krümmung der Bahnkurve zumindest einmal ändert. Beispielsweise ist die Bahnkurve ausgehend von der Ruhestellung zunächst in Richtung auf die Aufstellfläche für das Kraftfahrzeug gekrümmt, und ab einem Wendepunkt ändert sich die Bahnkurve derart, dass die Bahnkurve von der Aufstellfläche weg gekrümmt ist. In der Praxis zeigt sich, dass die Bewegung der Bürsteneinrichtung entlang der Bahnkurve mit mindestens einem Wendepunkt die beste Übereinstimmung mit den Gegebenheiten liefert, wenn man bei der überwiegenden Mehrheit der Kraftfahrzeuge den Durchmesser der Räder im Verhältnis zur Breite der Kraftfahrzeuge betrachtet. Dabei zeigt sich beispielsweise, dass der Durchmesser nicht proportional zur Breite ansteigt. Zwar werden die Räder üblicherweise umso größer, je breiter die Kraftfahrzeuge sind, wobei das Verhältnis des Durchmessers zur Breite zunächst ansteigt. Allerdings verringert sich das Verhältnis des Durchmessers zur Breite mit zunehmender Breite der Kraftfahrzeuge wieder. Es zeigt sich daher, dass bei Durchlaufen einer Bahnkurve, die mindestens einen Wendepunkt aufweist, eine deutlich höhere Wahrscheinlichkeit besteht, dass die Bürsteneinrichtung so positionsgerecht am Rad positioniert wird, dass eine Achse der Bürsteneinrichtung möglichst nah an der Radachse liegt und idealerweise mit dieser zusammenfällt. Die Überdeckung der rotierenden Bürste(n) mit dem Rad wird im Vergleich zu herkömmlichen Radwaschvorrichtungen gesteigert und dadurch das Reinigungsergebnis verbessert.

Es versteht sich, dass die Bürsteneinrichtung, je nach Breite des zu reinigenden Kraftfahrzeuges, in der Regel nur entlang eines Abschnittes der Bahnkurve bewegt wird. Unter Umständen erfolgt bei verhältnismäßig breitem Fahrzeug eine Bewegung ausgehend von der Ruhestellung nicht einmal bis zum mindestens einen Wendepunkt der Bahnkurve.

Als vorteilhaft erweist es sich, wenn die Bürsteneinrichtung entlang einer genau einen Wendepunkt aufweisenden Bahnkurve bewegbar ist.

Günstig ist es, wenn der mindestens eine Wendepunkt in der Mitte oder im Wesentlichen in der Mitte zwischen der Ruhestellung und einer bezüglich der Ruhestellung maximal ausgefahrenen Gebrauchsstellung der Bürstenrichtung angeordnet ist. Ausgehend von der Ruhestellung kann die Bürsteneinrichtung in eine Mehrzahl von Gebrauchsstellungen überführt werden, wobei die jeweilige Gebrauchsstellung durch die Breite des Kraftfahrzeuges und der davon abhängigen Position des Rades bestimmt wird. In der jeweiligen Gebrauchsstellung liegen die Bürsten mit Reinigungselementen am Rad an. Die Bürsteneinrichtung kann daher von der Ruhestellung in eine maximal bezüglich dieser ausgefahrene Gebrauchsstellung überführt werden. Der mindestens eine Wendepunkt und insbesondere genau eine Wendepunkt liegt vorteilhafterweise in der Mitte oder im Wesentlichen in der Mitte zwischen der maximal ausgefahrenen Gebrauchsstellung und der Ruhestellung.

Als vorteilhaft erweist es sich, wenn die Bürsteneinrichtung ausgehend von der Ruhestellung bis zum mindestens einen Wendepunkt entlang einer bogenförmigen Bahnkurve bewegbar ist. Die Bürsteneinrichtung wird dabei vorteilhafterweise entlang eines in Richtung auf die Aufstellfläche gekrümmten Bogens mit konkaver Bahnkurve verfahren.

Günstig ist es, wenn die Bürsteneinrichtung ausgehend vom mindestens einen Wendepunkt bis zu einer bezüglich der Ruhestellung maximal ausgefahrenen Gebrauchsstellung der Bürsteneinrichtung entlang einer bogenförmigen Bahnkurve bewegbar ist. Die Bürsteneinrichtung wird dabei vorteilhafterweise entlang eines von der Aufstellfläche weg gekrümmten Bogens mit konvexer Bahnkurve bewegt.

Beispielsweise ist die Bürsteneinrichtung entlang einer in Bezug auf den mindestens einen Wendepunkt im Wesentlichen punktsymmetrischen Bahnkurve bewegbar.

Als günstig erweist es sich, wenn die Bürsteneinrichtung entlang einer ausgehend von der Ruhestellung ungefähr kosinusförmigen Bahnkurve bewegbar ist. Die Bahnkurve kann zunächst bogenförmig in Richtung auf die Aufstellfläche gekrümmt sein. Am Wendepunkt ändert sich die Krümmung der Bahnkurve derart, dass sie bogenförmig von der Aufstellfläche weg gekrümmt ist.

Bei einer vorteilhaften Ausführungsform der erfindungsgemäßen Radwaschvorrichtung kann vorgesehen sein, dass die Bürsteneinrichtung beim Bewegen ausgehend von der Ruhestellung parallel oder im Wesentlichen parallel zu einer Aufstellfläche für das Kraftfahrzeug bewegbar ist. Die Bürsteneinrichtung kann dementsprechend zunächst parallel oder im Wesentlichen parallel zur Aufstellfläche bewegt werden. Dies kann insbesondere einer horizontalen oder im Wesentlichen horizontalen Bewegung entsprechen.

In entsprechender Weise ist es von Vorteil, wenn die Bürsteneinrichtung beim Überführen in eine bezüglich der Ruhestellung maximal ausgefahrene Gebrauchsstellung parallel oder im Wesentlichen parallel (insbesondere horizontal oder im Wesentlichen horizontal) zu einer Aufstellfläche für das Kraftfahrzeug bewegbar ist.

Die beiden vorstehend genannten vorteilhaften Ausführungsformen können dadurch zusammengefasst werden, dass die Bahnkurve anfangs und am Ende (bei maximal ausgefahrener Bürsteneinrichtung) vorteilhafterweise parallel oder im Wesentlichen parallel verläuft.

Als günstig erweist es sich, wenn die Bürsteneinrichtung in einer senkrecht oder im Wesentlichen senkrecht zu einer Aufstellfläche für das Kraftfahrzeug ausgerichteten Ebene bewegbar ist. Hierbei handelt es sich insbesondere um eine vertikale oder im Wesentlichen vertikale Ebene.

Die Zustelleinrichtung umfasst vorteilhafterweise eine Halteeinrichtung, an der die Bürsteneinrichtung festgelegt ist, und eine mit der Halteeinrichtung gekoppelte Verstelleinrichtung zum Überführen der Bürsteneinrichtung von der Ruhestellung in die mindestens eine Gebrauchsstellung. Die Verstelleinrichtung kann an der Halteeinrichtung angreifen, um diese mit der daran gehaltenen Bürsteneinrichtung zu bewegen und/oder zu verformen. In beiden Fällen kann infolgedessen die Bürsteneinrichtung bewegt werden. Die Verstelleinrichtung kann mit beiden wirksamen Enden an der Halteeinrichtung angreifen. Denkbar ist auch, dass die Verstelleinrichtung mit einem ersten wirksamen Ende an der Halteeinrichtung angreift und mit einem zweiten wirksamen Ende an einer Trageinrichtung, über die die erfindungsgemäße Radwaschvorrichtung an der Aufstellfläche für das Kraftfahrzeug aufsteht.

Bei der Trageinrichtung kann es sich beispielsweise um ein die Radwaschvorrichtung umfassendes Waschportal einer Fahrzeugwaschanlage handeln.

Die Verstelleinrichtung kann beispielsweise elektrisch, mechanisch, pneumatisch und/oder hydraulisch ausgestaltet sein. Es kann eine Steuereinrichtung zum Ansteuern der Verstelleinrichtung vorgesehen sein.

Bei einer vorteilhaften Ausführungsform kann die Verstelleinrichtung mindestens ein Kolben-Zylinder-Aggregat umfassen oder ausbilden. Durch eine Änderung der Länge des Kolben-Zylinder-Aggregates kann die Halteeinrichtung bewegt oder verformt und dadurch die Bürsteneinrichtung zugestellt werden.

Günstig ist es, wenn die Zustelleinrichtung eine Führungseinrichtung umfasst zur Führung der Bewegung der Bürsteneinrichtung. Dadurch kann eine zuverlässige Bewegung der Bürsteneinrichtung während der Zustellung entlang der vorgesehenen Bahnkurve sichergestellt werden.

Die Führungseinrichtung kann bei einer vorteilhaften Ausführungsform der erfindungsgemäßen Radwaschvorrichtung mindestens eine Führungskulisse umfassen, in die mindestens ein Führungsglied der Halteeinrichtung eingreift und deren Verlauf die Bahnkurve definiert. Die Halteeinrichtung kann ein oder mehrere Führungsglieder umfassen, die in die Führungskulisse eingreifen. Wird die Halteeinrichtung mittels der Verstelleinrichtung bewegt, dient die Führungskulisse zum Führen der Halteeinrichtung, wodurch die Bürsteneinrichtung entlang der Bahnkurve bewegt wird. Es kann eine Mehrzahl von Führungskulissen vorgesehen sein, wobei die Halteeinrichtung mit mindestens einem Führungsglied in eine jeweilige Führungskulisse eingreift. Alternativ oder ergänzend ist denkbar, dass die Halteeinrichtung mit zwei oder mehr Führungsgliedern in eine Führungskulisse eingreift.

Eine vorteilhafte Ausführungsform der erfindungsgemäßen Radwaschvorrichtung sieht vor, dass zwei im Abstand zueinander angeordnete Führungskulissen vorgesehen sind, zwischen denen die Halteeinrichtung angeordnet ist. Die Halteeinrichtung kann sich dadurch zu beiden Seiten in den Führungskulissen abstützen und dadurch zuverlässig geführt werden. Dies sichert insbesondere eine verkantungsfreie Bewegung oder Verformung der Halteeinrichtung.

Bei einer vorteilhaften Ausführungsform der erfindungsgemäßen Radwaschvorrichtung ist vorgesehen, dass die Halteeinrichtung die Führungseinrichtung umfasst oder ausbildet.

Günstig ist es bei einer vorteilhaften Ausführungsform, wenn die Führungseinrichtung mindestens eine Gelenkanordnung mit relativ zueinander verschwenkbaren Gelenkgliedern umfasst, an denen die Bürsteneinrichtung direkt oder indirekt über ein Halteteil der Halteeinrichtung festgelegt ist. Die Bürsteneinrichtung kann an den Gelenkgliedern direkt oder indirekt, mittels eines Halteteils der Halteeinrichtung, festgelegt sein. Die Gelenkanordnung kann an einer der Bürsteneinrichtung gegenüberliegenden Seiten direkt oder indirekt, etwa mittels eines Halteteils der Halteeinrichtung, an einer Trageinrichtung für die Radwaschvorrichtung festgelegt sein. Die Verstelleinrichtung kann an mindestens einem Gelenkglied angreifen und die Gelenkglieder dadurch auf diese Weise relativ zueinander verschwenken, um die Bürsteneinrichtung von der Ruhestellung in die mindestens eine Gebrauchsstellung zu überführen.

Optional ist es bei einer Radwaschvorrichtung der eingangs genannten Art, die eine Halteeinrichtung und eine Verstelleinrichtung umfasst, günstig, wenn die Führungseinrichtung mindestens eine Gelenkanordnung mit relativ zueinander verschwenkbaren Gelenkgliedern umfasst, an denen die Bürsteneinrichtung direkt oder indirekt über eine Halteteil der Halteeinrichtung festgelegt ist. Eine derartige Radwaschvorrichtung zum Reinigen eines Rades kann eine eigenständige Erfindung darstellen. Dabei besteht die Möglichkeit, die Bürsteneinrichtung entlang einer Bahnkurve beim Überführen von der Ruhestellung in die mindestens eine Gebrauchsstellung zu bewegen, welche Bahnkurve nicht notwendigerweise mindestens einen Wendepunkt aufzuweisen braucht. Beispielsweise könnte eine geradlinige Bewegung der Bürsteneinrichtung erfolgen, bei der die Bürsteneinrichtung während der Zustellbewegung in Richtung auf das Rad absenkbar ist. Die Gelenkanordnung kann vorteilhafterweise mindestens ein Scherengelenk umfassen oder ausbilden, dessen Schenkel die Gelenkglieder sind. Es ist eine Halteeinrichtung und mindestens eine Verstelleinrichtung wie vorstehend erläutert dabei vorgesehen. Schenkel des oder der Scherengelenke(s) könnten an Halteteilen der Halteeinrichtung angelenkt sein, wobei an einem Halteteil die Bürsteneinrichtung festgelegt ist und das andere Halteteil an der Trageinrichtung festgelegt ist.

Miteinander verschwenkbar verbundene Gelenkglieder der Gelenkanordnung definieren vorteilhafterweise Gelenke mit jeweiligen parallel zueinander verlaufenden Gelenkachsen. Die Gelenkachsen sind vorteilhafterweise parallel oder im Wesentlichen parallel zu einer Aufstellfläche für das Kraftfahrzeug ausgerichtet.

Günstig ist es, wenn die Gelenkanordnung mindestens ein Scherengelenk umfasst oder ausbildet, dessen Schenkel die Gelenkglieder sind. Über das Scherengelenk kann die Bürsteneinrichtung konstruktiv einfach und funktionell zuverlässig von der eingefahrenen Ruhestellung in die mindestens eine ausgefahrene Gebrauchsstellung überführt werden. In der Ruhestellung beansprucht die Radwaschvorrichtung in Folge des Scherengelenkes nur verhältnismäßig wenig Bauraum.

Günstig ist es, wenn zwei oder mehr in Serie angeordnete Scherengelenke vorhanden sind. Durch einen derartigen "Scherenzug" besteht die Möglichkeit, die Bürsteneinrichtung verhältnismäßig weit auszufahren, wobei die Radwaschvorrichtung in der Ruhestellung der Bürsteneinrichtung zugleich besonders wenig Bauraum beansprucht.

Günstig ist es, wenn die Gelenkanordnung ein Gelenkglied umfasst, das mit einem der Schenkel des Scherengelenkes und mit der Bürsteneinrichtung oder dem Halteteil, an dem die Bürsteneinrichtung festgelegt ist, gelenkig verbunden ist. Das Gelenkglied ist dementsprechend an einem der Schenkel und an der Bürsteneinrichtung oder am Halteteil angelenkt. Durch das Gelenkglied kann sichergestellt werden, dass die Bürsteneinrichtung mittels des Scherengelenkes nicht geradlinig bewegt wird, sondern bogenförmig.

In entsprechender Weise ist es von Vorteil, wenn die Gelenkanordnung ein Gelenkglied umfasst, das mit einem der Schenkel und mit einem Halteteil der Halteeinrichtung gelenkig verbunden ist, über welches Halteteil die Halteeinrichtung an einer Trageinrichtung zum Aufstellen der Radwaschvorrichtung auf einer Aufstellfläche für das Kraftfahrzeug festgelegt ist. Das Gelenkglied ist am Schenkel des Scherengelenkes und an dem Halteteil angelenkt. Dadurch wird sichergestellt, dass die Bürsteneinrichtung beim Verfahren mittels des Scherengelenkes nicht geradlinig bewegt wird, sondern bogenförmig.

Bei der Trageinrichtung kann es sich beispielsweise um ein Waschportal oder ein Teil desselben handeln. Die Trageinrichtung kann stationär sein oder relativ zum Kraftfahrzeug verfahren werden.

Als günstig erweist es sich, wenn zwei im Abstand zueinander angeordnete Gelenkanordnungen vorgesehen sind, zwischen denen die Verstelleinrichtung und/oder die Antriebseinrichtung für die Bürsteneinrichtung angeordnet ist. Durch zwei Gelenkanordnungen werden eine robustere Konstruktion der Radwaschvorrichtung und eine zuverlässigere Zustellung der Bürsteneinrichtung ermöglicht. Der Bauraum zwischen den Gelenkanordnungen wird günstigerweise für die Verstelleinrichtung und/oder die Antriebseinrichtung genutzt, um eine kompakte Bauform zu erzielen.

Die Gelenkanordnungen sind vorteilhafterweise funktionsgleich ausgestaltet, wobei einander korrespondierende Gelenkglieder der Gelenkanordnungen durch ein Verbindungsglied miteinander verbunden sind. Den Gelenkanordnungen kann dadurch eine steife, robuste Konstruktion verliehen werden. Gelenkglieder der Gelenkanordnungen einschließlich des Verbindungsgliedes weisen beispielsweise eine bügelförmige, U-förmige Gestalt auf.

Die Gelenkanordnung ermöglicht überdies eine verhältnismäßig leichte Bauweise der Radwaschvorrichtung.

Es kann vorgesehen sein, dass die Verstelleinrichtung direkt oder indirekt mit mindestens einem Gelenkglied der mindestens einen Gelenkanordnung gekoppelt ist. Durch die Verstelleinrichtung, beispielsweise das Kolben-Zylinder-Aggregat, kann dadurch auf ein Gelenkglied zum Verformen der Gelenkanordnung eingewirkt werden. Bei einer Ausführungsform kann vorgesehen sein, dass die Verstelleinrichtung direkt an einem Gelenkglied angreift. Bei einer andersartigen Ausführungsform ist zur Kopplung mit dem Gelenkglied ein Kopplungsglied vorgesehen.

Beispielsweise ist ein bügelförmiges Kopplungsglied vorgesehen, das an Gelenkgliedern der beiden Gelenkanordnungen angelenkt ist. Sind, wie vorstehend erwähnt, zwei Gelenkanordnungen vorhanden, greift die Verstelleinrichtung über das bügelförmige Kopplungsglied vorteilhafterweise an beiden Gelenkanordnungen an. Gesonderte Verstelleinrichtungen können dadurch eingespart werden. Zugleich wird eine zuverlässige Funktion der Zustelleinrichtung sichergestellt.

Die Zustelleinrichtung umfasst vorteilhafterweise mindestens ein entgegen der Wirkung der Verstelleinrichtung wirksames Rückstellelement, das zum Überführen der Bürsteneinrichtung in der mindestens einen Gebrauchsstellung in die Ruhestellung wirkt oder diese Überführung zumindest unterstützt. Beispielsweise greift das mindestens eine Rückstellelement in Gestalt eines Federelementes an Schenkeln des mindestens einen Scherengelenkes an.

Das mindestens eine Rückstellelement ist vorteilhafterweise als Federelement ausgestaltet, beispielsweise als Schraubenfeder.

Von Vorteil ist es, wenn das mindestens eine Rückstellelement zwischen den Gelenkanordnungen angeordnet ist. Dadurch kann eine kompakte Bauform der Radwaschvorrichtung erzielt werden.

Das mindestens eine Rückstellelement spannt vorteilhafterweise Gelenkglieder der mindestens einen Gelenkanordnung in Richtung auf die Ruhestellung der Bürsteneinrichtung relativ zueinander vor.

Bei einer andersartigen vorteilhaften Ausführungsform der erfindungsgemäßen Radwaschvorrichtung weist die Verstelleinrichtung zwei Antriebseinheiten auf zum Bewegen der Halteeinrichtung in zwei im Winkel zueinander ausgerichteten Richtungen, wobei die Bewegung der Bürsteneinrichtung entlang der Bahnkurve durch Ansteuerung der Antriebseinheiten steuerbar ist. Durch die zwei Antriebseinheiten, die beispielsweise von einer gemeinsamen Steuereinrichtung angesteuert werden können, kann die Bürsteneinrichtung gezielt entlang der Bahnkurve bewegt werden. Vorteilhafterweise besteht die Möglichkeit, die Form der Bahnkurve erforderlichenfalls durch entsprechende Ansteuerung abzuwandeln.

Die beiden Richtungen sind vorteilhafterweise senkrecht oder im Wesentlichen senkrecht zueinander ausgerichtet.

Beispielsweise sind die Richtungen parallel und senkrecht zu einer Aufstellfläche für das Kraftfahrzeug ausgerichtet, insbesondere horizontal und vertikal.

Vorteilhafterweise ist die Antriebseinrichtung an der Halteeinrichtung festgelegt. Dadurch kann eine kompakte Bauform der Radwaschvorrichtung erzielt werden. Beispielsweise ist die Halteeinrichtung am vorstehend erwähnten Halteteil der Halteeinrichtung festgelegt, an dem die Bürsteneinrichtung festgelegt ist. Die Bürsteneinrichtung und die Antriebseinrichtung sind bevorzugt an einander abgewandten Seiten des Halteteils angeordnet.

Die Bürsteneinrichtung kann eine Verteilungseinrichtung für eine Reinigungsflüssigkeit aufweisen. Beispielsweise ist mindestens eine Düse zum Versprühen einer Reinigungsflüssigkeit vorgesehen, insbesondere Wasser. Die Reinigungswirkung der Radwaschvorrichtung kann dadurch gesteigert werden.

An der Halteeinrichtung ist vorteilhafterweise eine Zufuhrleitung für Reinigungsflüssigkeit gehalten. Die Zufuhrleitung ist beispielsweise an die Bürsteneinrichtung angeschlossen, um die Verteilungseinrichtung mit der Reinigungsflüssigkeit zu beaufschlagen.

Wie bereits erwähnt, betrifft die Erfindung auch eine Fahrzeugwaschanlage. Eine erfindungsgemäße Fahrzeugwaschanlage umfasst mindestens eine Radwaschvorrichtung zum Reinigen eines Rades der vorstehend genannten Art.

Die Fahrzeugwaschanlage kann eine Portalwaschanlage oder eine Waschstraße sein.

Wie ebenfalls erwähnt, betrifft die Erfindung auch ein Verfahren. Ein erfindungsgemäßes, die eingangs genannte Aufgabe lösendes Verfahren zum Reinigen eines Rades eines Kraftfahrzeuges ist dadurch gekennzeichnet, dass eine Bürsteneinrichtung, die mindestens eine an das Rad anlegbare Bürste umfasst oder ausbildet, mittels einer Zustelleinrichtung von einer radfernen Ruhestellung in eine radnahe Gebrauchsstellung überführt und dabei abgesenkt wird. Die Bürsteneinrichtung wird in einer Zustellbewegung entlang einer mindestens einen Wendepunkt aufweisenden Bahnkurve von der Ruhestellung in die Gebrauchsstellung bewegt.

Die Vorteile, die mit der erfindungsgemäßen Radwaschvorrichtung erzielt werden können, können bei der Fahrzeugwaschanlage und bei Ausübung des Verfahrens ebenfalls erzielt werden. Diesbezüglich kann zur Vermeidung von Wiederholungen auf die voranstehenden Ausführungen verwiesen werden.

Vorteilhafte Ausführungsformen der erfindungsgemäßen Fahrzeugwaschanlage und vorteilhafte Ausführungsbeispiele des erfindungsgemäßen Verfahrens ergeben sich durch vorteilhafte Ausführungsformen der erfindungsgemäßen Radwaschvorrichtung. Diesbezüglich kann ebenfalls auf die voranstehenden Ausführungen verwiesen werden.

Die nachfolgende Beschreibung vorteilhafter Ausführungsformen der Erfindung dient im Zusammenhang mit der Zeichnung der näheren Erläuterung der Erfindung. Die nachfolgend erläuterten Ausführungsformen der Radwaschvorrichtung ermöglichen die Durchführung vorteilhafter Ausführungsbeispiele des Verfahrens. Es zeigen:
- Figur 1:: eine schematische Darstellung einer erfindungsgemäßen Fahrzeugwaschanlage, umfassend zwei erfindungsgemäße Radwaschvorrichtungen;
- Figur 2:: eine perspektivische Darstellung einer erfindungsgemäßen Radwaschvorrichtung, deren Bürsteneinrichtung eine ausgefahrene Gebrauchsstellung einnimmt;
- Figur 3:: eine Seitenansicht der Radwaschvorrichtung aus Figur 2, wobei die Bürsteneinrichtung eine eingefahrene Ruhestellung einnimmt, sowie schematisch ein Rad eines Kraftfahrzeuges;
- Figur 4:: eine Darstellung entsprechend Figur 3, wobei die Bürsteneinrichtung eine ausgefahrene Gebrauchsstellung einnimmt;
- Figur 5:: eine vergrößerte Darstellung gemäß Detail A in Figur 4;
- Figur 6:: eine Darstellung entsprechend Figur 5, das die Benutzung der Radwaschvorrichtung bei einem Rad größeren Durchmessers eines breiteren Kraftfahrzeuges zeigt;
- Figur 7:: eine weitere Ausführungsform einer erfindungsgemäßen Radwaschvorrichtung, deren Bürsteneinrichtung eine eingefahrene Ruhestellung einnimmt, sowie schematisch ein Rad eines Kraftfahrzeuges;
- Figur 8:: eine Darstellung entsprechend Figur 7, wobei die Bürsteneinrichtung eine ausgefahrene Gebrauchsstellung einnimmt;
- Figur 9:: eine vergrößerte Darstellung gemäß Detail B in Figur 8;
- Figur 10:: eine Darstellung entsprechend Figur 9, die die Benutzung der Radwaschvorrichtung bei einem Rad größeren Durchmessers eines breiteren Kraftfahrzeuges zeigt; und
- Figur 11:: eine weitere Ausführungsform einer erfindungsgemäßen Radwaschvorrichtung, deren Bürsteneinrichtung eine eingefahrene Ruhestellung einnimmt, sowie schematisch ein Rad eines Kraftfahrzeuges.

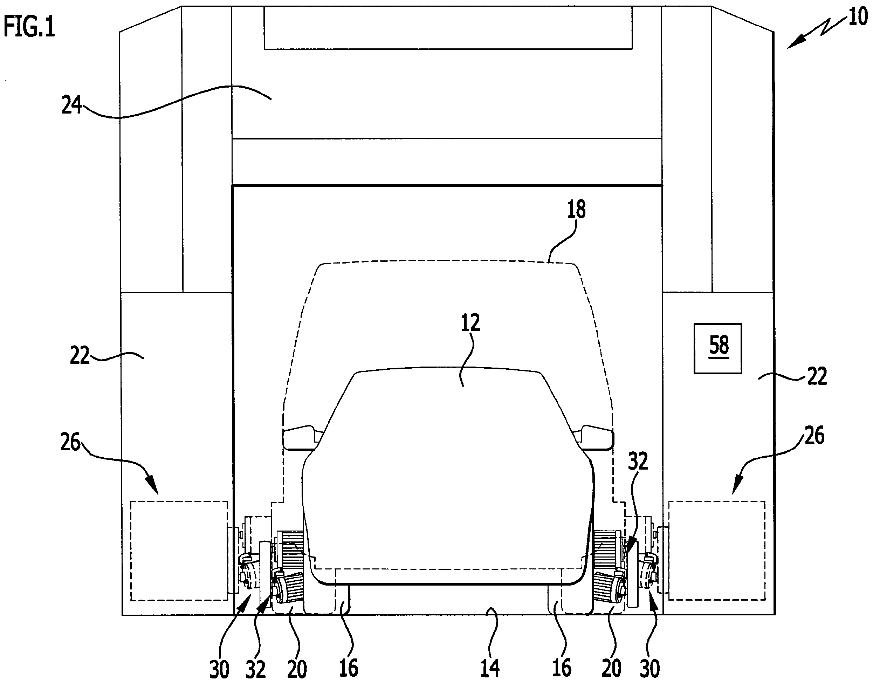

Figur 1 zeigt schematisch eine bevorzugte Ausführungsform einer mit dem Bezugszeichen 10 belegten erfindungsgemäßen Fahrzeugwaschanlage. Die Fahrzeugwaschanlage 10 ist vorliegend als Portalwaschanlage ausgestaltet, die entlang einer senkrecht zur Zeichenebene ausgerichteten Verfahrrichtung relativ zu einem Kraftfahrzeug 12 verfahrbar ist. Das Kraftfahrzeug 12 ist auf einer Aufstellfläche 14 positioniert und mit seiner Längsrichtung entlang der Verfahrrichtung der Fahrzeugwaschanlage 10 ausgerichtet. Die Aufstellfläche 14 wird vorliegend als horizontal ausgerichtet angenommen.

Das Kraftfahrzeug 12 umfasst zum Aufstellen auf der Aufstellfläche 14 Räder 16, die mittels der nachfolgend erläuterten erfindungsgemäßen Radwaschvorrichtung abgereinigt werden können.

Figur 1 zeigt ferner ein weiteres Kraftfahrzeug 18, welches größer als das Kraftfahrzeug 12 ist. Beispielsweise ist das Kraftfahrzeug 12 ein Wagen der Kompaktklasse und das Kraftfahrzeug 18 ein SUV. Das Kraftfahrzeug 18 umfasst seinerseits Räder 20 zum Aufstellen auf der Aufstellfläche 14, die einen größeren Durchmesser aufweisen als die Räder 16 des Kraftfahrzeuges 12. Darüber hinaus ist das Kraftfahrzeug 18 breiter als das Kraftfahrzeug 12.

Es wird angenommen, dass das Kraftfahrzeug 12, 18 in korrekter, bestimmungsgemäßer Weise relativ zur Fahrzeugwaschanlage 10 positioniert ist und dass es sich im Wesentlichen mittig zwischen Trägern 22 des Waschportals befindet. Die Träger 22 sind vertikal ausgerichtet und beispielsweise mittels eines Querträgers 24 miteinander verbunden.

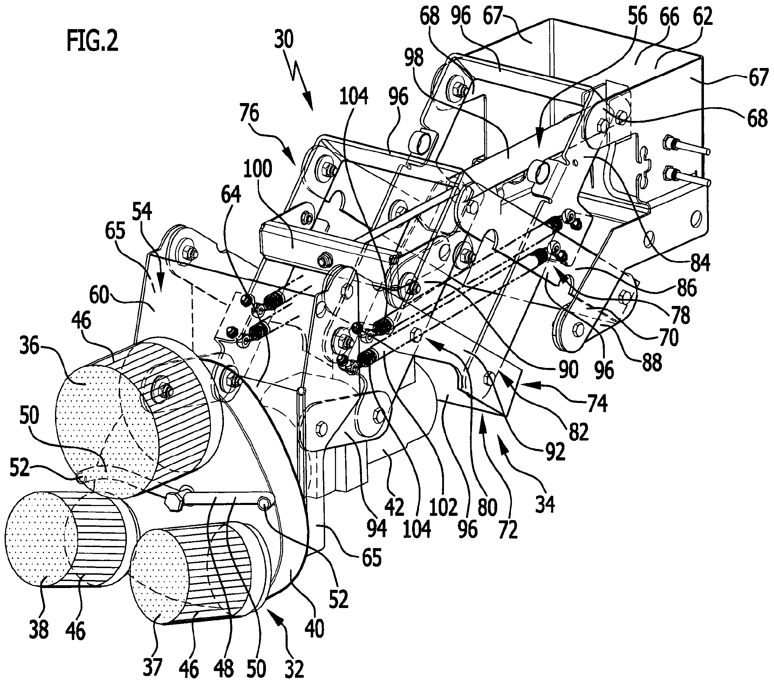

Die Träger 22 bilden jeweils eine Trageinrichtung 26 für eine vorteilhafte Ausführungsform einer erfindungsgemäßen Radwaschvorrichtung, belegt mit dem Bezugszeichen 30. An jedem Träger 22 ist eine Radwaschvorrichtung 30 gehalten und steht damit mittelbar auf der Aufstellfläche 14 auf, relativ zu welcher die Radwaschvorrichtung 30 durch Verfahren des Waschportals bewegt werden kann. Die Radwaschvorrichtungen 30 sind funktionsgleich ausgestaltet, so dass nachfolgend nur mit Verweis auf die Figuren 2 bis 6 eine der Radwaschvorrichtungen 30 erläutert wird, die in Figur 1 rechts dargestellte Radwaschvorrichtung. Für die andere, in Figur 1 links dargestellte Radwaschvorrichtung 30, gelten die nachfolgenden Ausführungen entsprechend.

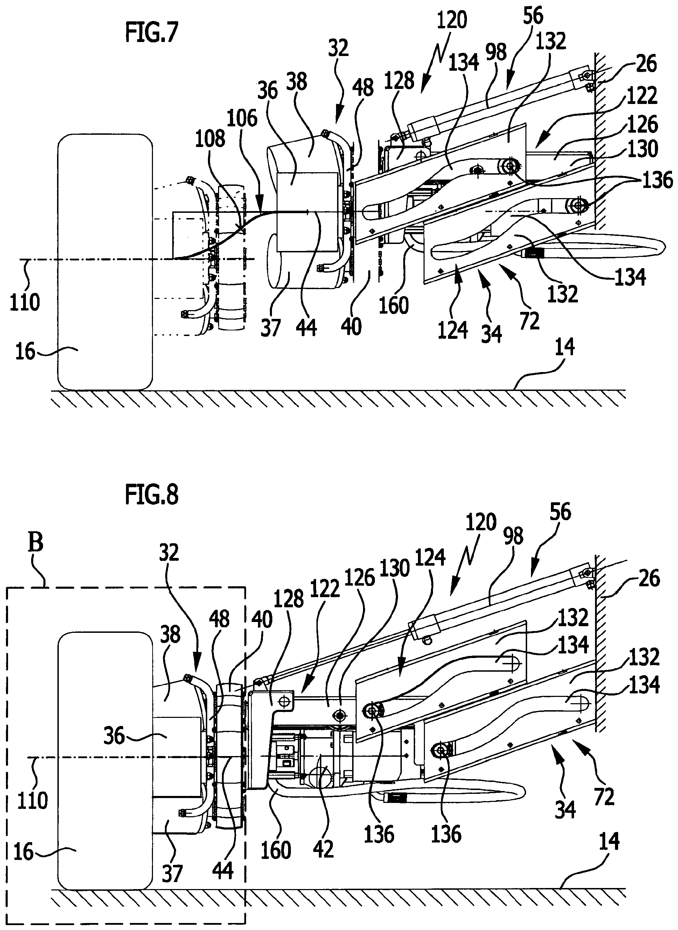

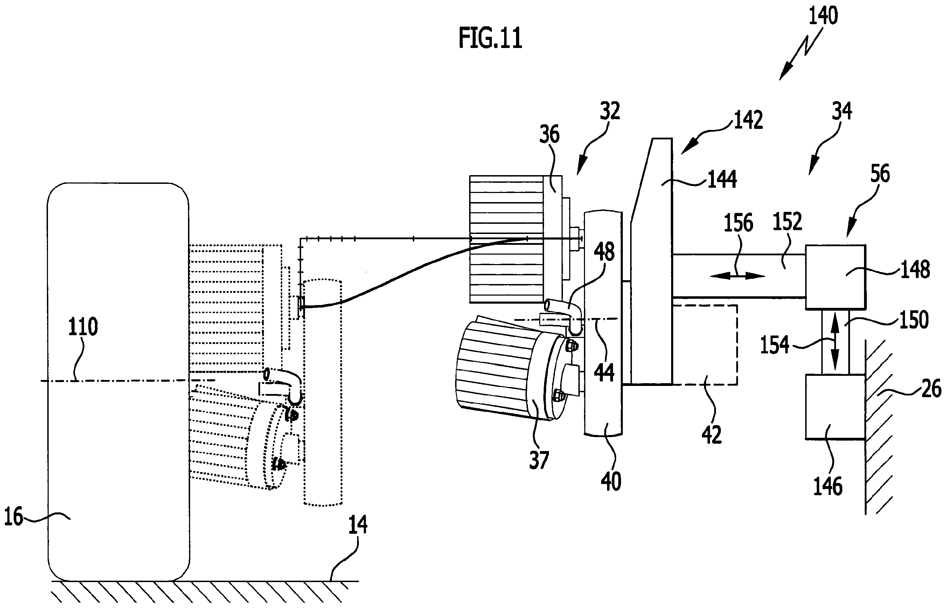

Entsprechendes gilt für die mit Verweis auf die Figuren 7 bis 10 nachfolgend erläuterte vorteilhafte Ausführungsform einer erfindungsgemäßen Radwaschvorrichtung sowie für die mit Verweis auf Figur 11 erläuterte vorteilhafte Ausführungsform einer erfindungsgemäßen Radwaschvorrichtung.

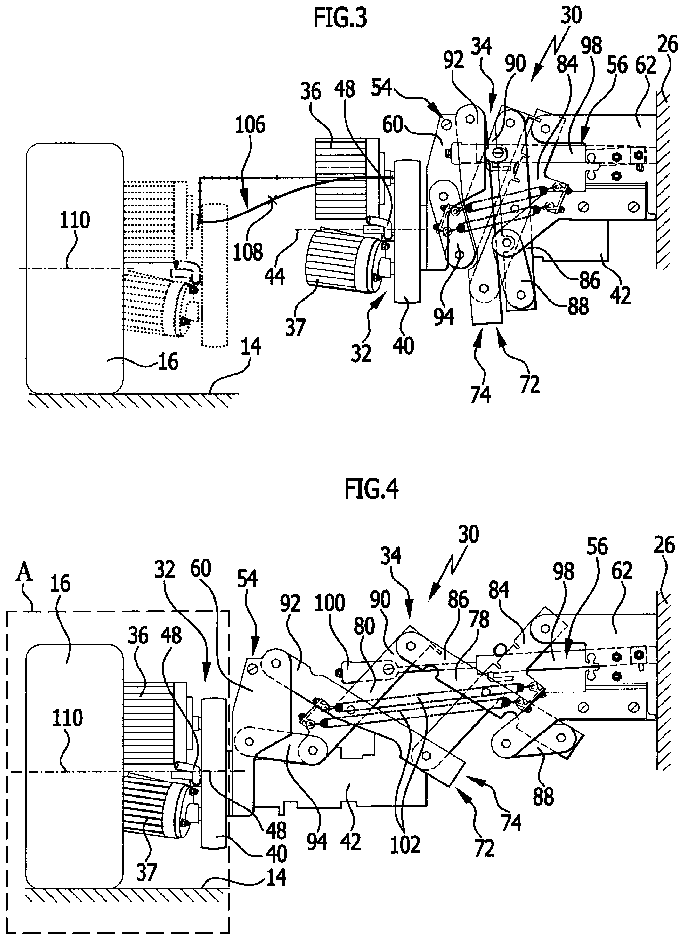

Die erfindungsgemäße Radwaschvorrichtung 30 umfasst eine Bürsteneinrichtung 32 und eine Zustelleinrichtung 34, um die Bürsteneinrichtung 32 von einer radfernen Ruhestellung (Figur 3) in mindestens eine radnahe Gebrauchsstellung (Figur 4) und umgekehrt zu überführen.

Die Bürsteneinrichtung 32 kann unterschiedlich ausgestaltet sein, beispielsweise ist mindestens eine Bürste zum Anlegen an das Rad 16 vorgesehen. Die mindestens eine Bürste kann Reinigungselemente aufweisen, insbesondere in Gestalt von Reinigungsborsten.

Vorliegend umfasst die Bürsteneinrichtung 32 drei Bürsten 36, 37, 38, die an einem Bürstenträger 40 gehalten sind. Der Bürstenträger 40 bildet ein Gehäuse, in dem ein von einer Antriebseinrichtung 42 für die Bürsteneinrichtung 32 angetriebenes Getriebe (nicht gezeigt) aufgenommen ist. Der Aufbau des Getriebes und die Halterungen der Bürsten 36, 37, 38 sowie deren Ausgestaltung im Detail können unterschiedlich ausfallen, beispielsweise wie in der eingangs genannten WO 2012/110094 A1 beschrieben. Bei der Radwaschvorrichtung 30 besteht mit der Antriebseinrichtung 32 die Möglichkeit, die Bürsten 36, 37, 38 drehend anzutreiben. Dabei dreht sich der Bürstenträger 40 um eine zentrale Bürstenachse 44. Auf diese Weise drehen sich die Bürsten 36, 37, 38 um die Bürstenachse 44, wobei die Bürsten 36, 37, 38 unter der Wirkung des Getriebes zusätzlich eine Rotation um ihre jeweilige eigene Achse ausführen.

Die Bürsten 36, 37, 38 weisen jeweils Reinigungsborsten 46 zum Anlegen an das Rad 16 auf.

Außerdem umfasst die Bürsteneinrichtung 32 eine Verteilungseinrichtung 48 für Reinigungsflüssigkeit. Die Verteilungseinrichtung 48 umfasst zum Beispiel mindestens einen Sprüharm 50 mit daran angeordneter Düse 52. Reinigungsflüssigkeit, insbesondere Wasser, mit der die Verteilungseinrichtung 48 beaufschlagt wird, kann über die Düsen 52 zur Steigerung der Reinigungswirkung auf das Rad 16 gerichtet werden.

Die Zustelleinrichtung 34 umfasst eine Halteeinrichtung 54 und eine Verstelleinrichtung 56. Die Verstelleinrichtung 56 und die Antriebseinrichtung 42 sind zum Beispiel von einer Steuereinrichtung 58 ansteuerbar, die Bestandteil der Radwaschvorrichtung 30 ist oder vorzugsweise Bestandteil der Fahrzeugwaschanlage 10 zur Steuerung von deren übrigen Funktionen und Vorgängen.

Wie insbesondere aus den Figuren 2 und 4 hervorgeht, umfasst die Halteeinrichtung 54 ein erstes Halteteil 60 und ein im Abstand zu diesem angeordnetes zweites Halteteil 62. Das Halteteil 60 dient zur Halterung der Bürsteneinrichtung 32 und der Antriebseinrichtung 42. Die Bürsteneinrichtung 32 und die Antriebseinrichtung 42 sind auf einander abgewandten Seiten am Halteteil 60 festgelegt. Dabei kann die Bürsteneinrichtung 32 selbstverständlich die von der Antriebseinrichtung 42 hervorgerufene Drehbewegung um die Bürstenachse 44 ausführen.

Das Halteteil 60 weist einen im Wesentlichen plattenförmigen mittleren Abschnitt 64 und seitliche Abschnitte 65 an einander abgewandten Seiten des mittleren Abschnittes 64 auf. Beispielsweise ist das Halteteil 60 durch ein gekantetes Blechteil gefertigt.

Während das Halteteil 60 an einer ersten, der Bürsteneinrichtung 32 zugewandten Seite der Halteeinrichtung 54 angeordnet ist, ist das Halteteil 62 an einer gegenüberliegenden, der Bürsteneinrichtung 32 abgewandten Seite der Halteeinrichtung 54 angeordnet. Über das Halteteil 62 ist die Radwaschvorrichtung 30 an der Trageinrichtung 26 des Waschportals festgelegt. Das zweite Halteteil 62 umfasst vorliegend einen mittleren Abschnitt 66 und seitliche Abschnitte 67 auf einander gegenüberliegenden Seiten des mittleren Abschnittes 66. Beispielsweise ist das Halteteil 62 als gekantetes Blechteil gefertigt.

Im vorliegenden Fall umfasst das Halteteil 62 am jeweiligen seitlichen Abschnitt 67 in Richtung des Halteteils 60 zwei zungenartig ausgestaltete Vorsprünge 68, 70. Dabei ist der untere Vorsprung 70 länger als der obere Vorsprung 68. Dies könnte jedoch auch andersartig sein. Das Halteteil 62 könnte auch ohne Vorsprünge 68, 70 ausgestaltet sein.

Um die Bewegung der Bürsteneinrichtung 32 von der Ruhestellung in die mindestens eine Gebrauchsstellung zu führen, umfasst die Zustelleinrichtung 34 eine Führungseinrichtung 72. Die Führungseinrichtung 72 wird vorliegend durch die Halteeinrichtung 54 ausgebildet.

Insbesondere umfasst die Führungseinrichtung 72 zwei Gelenkanordnungen 74, 76. Die Gelenkanordnungen 74, 76 sind funktionsgleich ausgestaltet. Für die Komponenten der Gelenkanordnungen 74, 76 werden daher identische Bezugszeichen benutzt. Nachfolgend wird im Wesentlichen auf die Gelenkanordnung 74 eingegangen, wobei die Ausführungen in entsprechender Weise für die Gelenkanordnung 76 gelten.

Die Gelenkanordnung 74 umfasst mindestens ein Scherengelenk und vorliegend zwei Scherengelenke 78, 80. Die Scherengelenke 78, 80 sind in Serie angeordnet, so dass die Führungseinrichtung 72 insgesamt einen Scherenzug 82 ausbildet.

Das Scherengelenk 78 umfasst relativ zueinander schwenkbare, kreuzweise miteinander verbundene Gelenkglieder 84, 86. Das Gelenkglied 84 ist am Vorsprung 68 angelenkt. Das Gelenkglied 86 ist nicht am Vorsprung 70 angelenkt.

Zu diesem Zweck ist ein weiteres Gelenkglied 88 der Gelenkanordnung 74 vorgesehen, das am Vorsprung 70 und am Gelenkglied 86 angelenkt ist.

Das Scherengelenk 80 umfasst relativ zueinander schwenkbare, kreuzweise miteinander verbundene Gelenkglieder 90, 92. Das Gelenkglied 90 ist an der dem Gelenkglied 88 abgewandten Seite am Gelenkglied 86 angelenkt. Darüber hinaus ist das Gelenkglied 90 über ein weiteres Gelenkglied 94 der Gelenkanordnung 74 am Halteteil 60 angelenkt. Das Gelenkglied 94 ist dementsprechend am Halteteil 60 und am Gelenkglied 90 angelenkt.

Das Gelenkglied 92 ist an der dem Vorsprung 68 abgewandten Seite am Gelenkglied 84 angelenkt. Mit der diesem abgewandten Seite ist das Gelenkglied 92 am Halteteil 60 angelenkt.

Zur Versteifung der Führungseinrichtung 72 sind die einander korrespondierenden Gelenkglieder 84, 86, 90 und 92 der Gelenkanordnungen 74, 76 über ein jeweiliges Verbindungsglied 96 miteinander verbunden. Die jeweilige Kombination aus Gelenkgliedern 84, 86, 90, 92 und dem entsprechenden Verbindungsglied 96 ist dabei bügelförmig oder U-förmig (Figur 2).

Die Verstelleinrichtung 56 umfasst ein pneumatisch oder hydraulisch betätigbares Kolben-Zylinder-Aggregat 98 mit einem ersten Ende, das durch den Zylinder gebildet ist, und einem zweiten Ende, das durch den Kolben gebildet ist. Mit dem ersten Ende ist das Kolben-Zylinder-Aggregat 98 am Halteteil 62 festgelegt, insbesondere dessen mittleren Abschnitt 66. Das zweite Ende des Kolben-Zylinder-Aggregates 98 ist mit den Gelenkanordnungen 74, 76 gekoppelt. Zu diesem Zweck ist ein Kopplungsglied 100 vorgesehen. Das Kopplungsglied 100 ist vorliegend bügelförmig ausgestaltet und an Gelenkgliedern der Gelenkanordnungen 74, 76 angelenkt. Dabei handelt es sich um die Gelenkglieder 90. Möglich wäre, dass die Verstelleinrichtung 56 auch nur an einer der Gelenkanordnungen 74, 76 angreift. Denkbar ist auch ein Angreifen am Halteteil 60.

Die Zustelleinrichtung 34 umfasst ferner mindestens eine Rückstellelement, das entgegen dem Kolben-Zylinder-Aggregat 98 der Verstelleinrichtung 56 wirkt. Vorliegend sind mehrere Rückstellelemente 102 in Gestalt von Federelementen 104 vorgesehen. Die Federelemente 104 sind ausgestaltet als auf Zug wirkende Schraubenfedern. Die Federelemente 104 greifen an zwei relativ zueinander bewegbaren Gelenkgliedern der Gelenkanordnungen 74, 76 an. Vorliegend greifen an den Gelenkgliedern 84, 90 jeder Gelenkanordnung 74, 76 zwei Federelemente 104 an. Dabei könnte es sich jedoch auch um andere Gelenkglieder handeln.

Die Radwaschvorrichtung 30 weist eine insgesamt kompakte Bauform auf. Dabei ist die Konstruktion zugleich verhältnismäßig leicht und robust.

Das Kolben-Zylinder-Aggregat 98, die Antriebseinrichtung 42 und die Federelemente 104 sind zwischen den Gelenkanordnungen 74, 76 angeordnet, was die Kompaktbauform begünstigt.

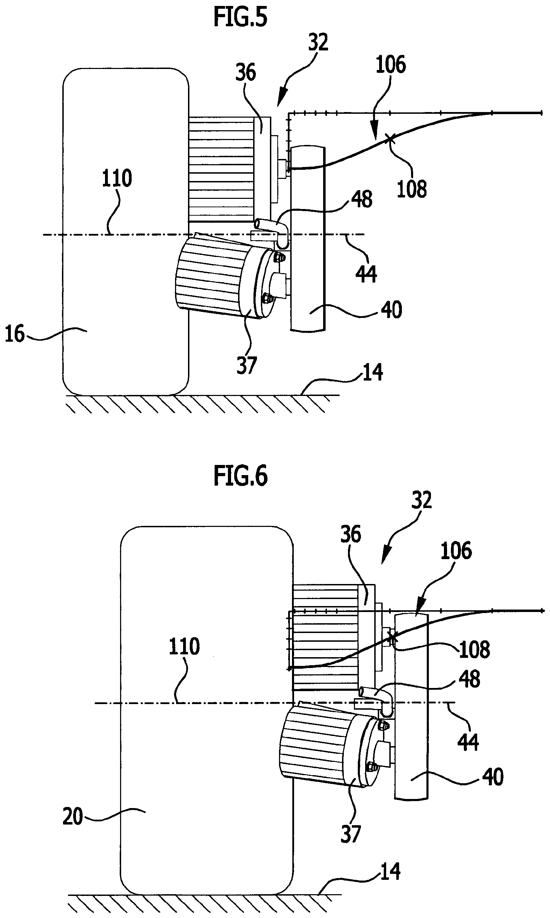

Nachfolgend wird unter Verweis insbesondere auf die Figuren 3 bis 6 die Funktionsweise der Radwaschvorrichtung 30 und der Fahrzeugwaschanlage 10 sowie die Durchführung eines erfindungsgemäßen Verfahrens beschrieben. Die Figuren 3 bis 5 stellen beispielhaft die Reinigung des Rades 16 des Kraftfahrzeuges 12 dar, wohingegen Figur 6 beispielhaft die Reinigung des Rades 20 des Kraftfahrzeuges 18 zeigt.

Die Bürsteneinrichtung 32 kann eine in Figur 3 gezeigte Ruhestellung einnehmen, wenn die Radwaschvorrichtung 30 nicht in Gebrauch ist. Das Kolben-Zylinder-Aggregat 98 nimmt bei eingefahrenem Kolben eine verkürzte Konfiguration ein. Die Scherengelenke 78, 80 sind so eingefahren, dass die Bürsteneinrichtung 32 so nahe wie möglich am Halteteil 62 positioniert ist. Die Bürsteneinrichtung 32 kann dadurch platzsparend bevorratet werden.

Zum Überführen der Bürsteneinrichtung 32 von der Ruhestellung in eine radnahe Gebrauchsstellung wird das Kolben-Zylinder-Aggregat 98 ausgefahren.

Dadurch wird die Halteeinrichtung 54 durch Verschwenken der Gelenkglieder relativ zueinander verformt. Die Scherengelenke 78, 80 werden ausgefahren und die Bürsteneinrichtung 32 in größeren Abstand zum Halteteil 62 gebracht.

Die Bewegung der Bürsteneinrichtung 32 erfolgt nicht geradlinig. Dies beruht darauf, dass der Scherenzug 82 nicht nur verlängert wird, sondern abhängig von der Länge des Scherenzuges 82 sich auch dessen Neigung verändert. Ursächlich hierfür ist die Anlenkung des Scherengelenkes 78 am Halteteil 62 über das Gelenkglied 88 und die Anlenkung des Scherengelenkes 80 am Halteteil 60 über das Gelenkglied 94.

Dies führt dazu, dass die Bürsteneinrichtung 32 ausgehend von der Ruhestellung bis zu einer maximal ausgefahrenen Gebrauchsstellung entlang einer Bahnkurve 106 bewegbar ist. Dabei wird die Bürsteneinrichtung 32 bei Bewegung in Richtung auf das Rad 16 abgesenkt. Die Bewegung der Bürsteneinrichtung 32 erfolgt nicht geradlinig, sondern bogenförmig. Die Figuren 3, 5 und 6 sowie die Figuren 7, 9, 10 und 11 für die nachfolgend erläuterten Ausführungsformen zeigen auch schematisch ein Koordinatensystem zur Verdeutlichung des Verlaufes der Bahnkurve 106.

Je nachdem, wie weit die Bürsteneinrichtung 32 ausgehend von der Ruhestellung in die Gebrauchsstellung ausgefahren wird, bis die Reinigungsborsten 46 das Rad kontaktieren, durchläuft die Bürsteneinrichtung 32 die Bahnkurve 106 bei der Zustellung gesamt oder nur teilweise. Dies hängt von der Position des Rades relativ zur Radwaschvorrichtung 30 ab. Vom Durchmesser des Rades hängt ferner ab, ob die Bürsteneinrichtung 32 koaxial zum Rad ausgerichtet ist, wenn die Bürsten 36, 37, 38 an das Rad angelegt werden. Die Figuren 3 bis 5 zeigen beispielhaft, wie die Bürsteneinrichtung 32 in eine maximal ausgefahrene Gebrauchsstellung zum Reinigen des Rades 16 ausgefahren werden kann, um den gesamten Verlauf der Bahnkurve 106 wiederzugeben.

Die Zustelleinrichtung 34 ist so ausgebildet, dass die Bahnkurve 106, entlang der die Bürsteneinrichtung 32 bewegt wird, mindestens einen Wendepunkt 108 aufweist. Vorliegend ist genau ein Wendepunkt 108 vorgesehen. Der Wendepunkt 108 liegt ungefähr im Bereich der Mitte der Bahnkurve 106 zwischen der Ruhestellung der Bürsteneinrichtung 32 und deren maximal ausgefahrener Gebrauchsstellung. Ausgehend von der Ruhestellung ist die Bürsteneinrichtung 32 bis zum Wendepunkt 108 bogenförmig in Richtung auf die Aufstellfläche 14 bewegbar, die Krümmung der konkaven Bahnkurve 106 weist in Richtung auf die Aufstellfläche 14. Vom Wendepunkt 108 bis in die maximal ausgefahrene Gebrauchsstellung ist die Bürsteneinrichtung 32 bogenförmig entlang der Bahnkurve 106 bewegbar, die Krümmung der konvexen Bahnkurve 106 weist von der Aufstellfläche 14 weg.

Insgesamt ist die Bahnkurve 106 ausgehend von der Ruhestellung der Bürsteneinrichtung 32 ungefähr kosinusförmig. Beim Bewegen ausgehend von der Ruhestellung und beim Überführen in die maximal ausgefahrene Gebrauchsstellung ist die Bürsteneinrichtung 32 ungefähr parallel zur Aufstellfläche 14 und insbesondere ungefähr horizontal bewegbar.

Die Bewegung der Bürsteneinrichtung 32 erfolgt in oder im Wesentlichen in einer Ebene senkrecht zur Aufstellfläche 14, insbesondere in einer vertikalen Ebene.

Es zeigt sich, dass in der Praxis durch das Durchlaufen der Bahnkurve 106 mit mindestens einem Wendepunkt 108 eine bessere Zustellung der Bürsteneinrichtung 32 an Räder unterschiedlichen Durchmessers von Kraftfahrzeugen unterschiedlicher Breite erfolgen kann. Mit zunehmender Breite der Kraftfahrzeuge steigt der Durchmesser der Räder in der Regel an, jedoch nicht proportional, so nimmt das Verhältnis des Durchmessers zur Breite der Kraftfahrzeuge bei wachsender Breite wieder ab.

Indem die Bürsteneinrichtung 32 die Bahnkurve 106 bei der Zustellung durchläuft, kann dadurch besser als im Stand der Technik sichergestellt werden, dass die Bürsteneinrichtung 32 positionsgerecht zugestellt wird. Eine positionsgerechte Zustellung, bei der die Bürstenachse 44 idealerweise mit der Radachse 110 fluchtet, ist in den Figuren 3 bis 5 am Beispiel des Rades 16 dargestellt.

Figur 6 zeigt die Situation bei dem im Verhältnis zum Rad 16 größeren Rad 20, das außerdem aufgrund des breiteren Kraftfahrzeuges 18 näher an der Radwaschvorrichtung 30 angeordnet ist. Dabei durchläuft die Bürsteneinrichtung 32 nur einen Teil der Bahnkurve 106, beispielsweise ungefähr bis zum Wendepunkt 108. Auch beim Rad 20 erfolgt eine positionsgerechte Zustellung, bei der die Bürstenachse 44 mit der Radachse 110 fluchtet.

Bei noch größeren Rädern durchläuft die Bürsteneinrichtung 32 einen noch geringeren Teil der Bahnkurve 106, beispielsweise noch nicht einmal bis zum Wendepunkt 108.

Nachfolgend wird unter Verweis auf die Figuren 7 bis 10 auf eine weitere, mit dem Bezugszeichen 120 belegte vorteilhafte Ausführungsform einer erfindungsgemäßen Radwaschvorrichtung eingegangen. Anschließend folgt unter Verweis auf Figur 11 eine Erläuterung einer mit dem Bezugszeichen 140 belegten vorteilhaften Ausführungsform einer erfindungsgemäßen Radwaschvorrichtung. Für gleiche oder gleichwirkende Merkmale und Bauteile der Radwaschvorrichtungen 30, 120 und 140 werden identische Bezugszeichen benutzt. Die mit der Radwaschvorrichtung 30 erzielbaren Vorteile können mit den Radwaschvorrichtungen 120, 140 ebenfalls erzielt werden, so dass diesbezüglich auf die voranstehenden Erläuterungen verwiesen werden kann. Es wird lediglich auf die wichtigsten Unterschiede eingegangen.

Bei der Radwaschvorrichtung 120 umfasst die Zustelleinrichtung 34 eine Halteeinrichtung 122, die Verstelleinrichtung 56 und eine Führungseinrichtung 124.

Die Halteeinrichtung 122 weist einen Halterahmen 126 auf mit Halteteilen 128, 130. Das Halteteil 128 entspricht dem Halteteil 60 und dient zur Festlegung der Bürsteneinrichtung 32. Das Halteteil 130 erstreckt sich vom Halteteil 128 in einer von der Bürsteneinrichtung weg weisenden Richtung. Am Halteteil 130 und am Halteteil 128 ist die Antriebseinrichtung 42 gehalten.

Die Führungseinrichtung 124 umfasst eine Zwangsführung für den Halterahmen 126. Die Zwangsführung ist ausgestaltet als Führungskulisse. Vorliegend sind insgesamt vier Führungskulissen 132 vorgesehen, wobei auf jeder der beiden Seiten des Halterahmens 126 zum Beispiel zwei Führungskulissen 132 angeordnet sind. Hiervon sind in den Figuren 7 und 8 zwei Führungskulissen 132 gezeigt. Auf der gegenüberliegenden Seite des Halterahmens 126 (unterhalb der Zeichenebene) sind zwei weitere Führungskulissen 132 vorhanden, die in der Zeichnung nicht zur erkennen sind.

Die zwei auf einer Seite angeordnete Führungskulissen 132 sind fest miteinander verbunden. Eine Führungskulisse 132 ist an der Trageinrichtung 26 festgelegt. Dies ist in den Figuren 7 und 8 schematisch dargestellt. An der Trageinrichtung 26 greift auch der Zylinder des Kolben-Zylinder-Aggregates 98 an. Hierbei ist vorteilhafterweise eine gelenkige Verbindung vorgesehen. Das gegenüberliegende Ende des Kolben-Zylinder-Aggregates 98 ist vorzugsweise gelenkig mit dem Halteteil 128 verbunden.

Die Führungskulisse 132 ist beispielsweise plattenförmig und umfasst eine Kulissenbahn 134. Die Kulissenbahn 134 definiert den Verlauf der Bahnkurve 106.

Wird die Bürsteneinrichtung 32 bei der Radwaschvorrichtung 120 zugestellt, erfolgt dies unter Verlängerung des Kolben-Zylinder-Aggregates 98. Dies führt dazu, dass der Halterahmen 126, der mittels Führungsgliedern 136 in die Führungskulissen 132 eingreift, in Richtung auf das Rad bewegt und entlang der Kulissenbahn 134 verschoben wird.

Auch bei der Radwaschvorrichtung 120 ist die Führungseinrichtung 124 so ausgestaltet, dass die Bahnkurve 106 mindestens einen Wendepunkt 108 aufweist. Hinsichtlich der weiteren Eigenschaften der Bahnkurve 106 wird auf obige Ausführungen zur Radwaschvorrichtung 30 verwiesen.

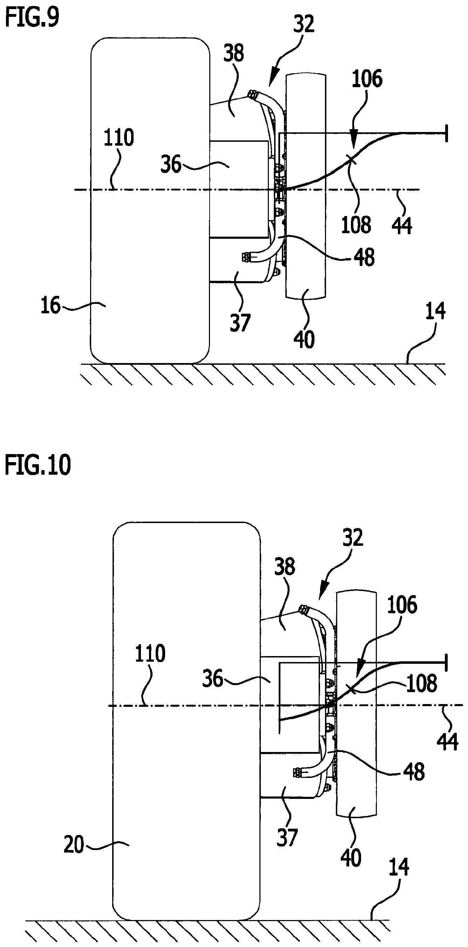

Die Figuren 8 und 9 zeigen die Bürsteneinrichtung 32 in einer maximal ausgefahrenen Gebrauchsstellung, anliegend am Rad 16, wobei die Bürstenachse 44 mit der Radachse 110 fluchtet.

Figur 10 zeigt ein der Figur 6 entsprechendes Beispiel, bei dem die Bürsteneinrichtung 32 entlang der Bahnkurve 106 nur teilweise ausgefahren ist und das Rad 20 kontaktiert. Auch hier fällt die Bürstenachse 44 mit Radachse 110 zusammen.

Bei noch größeren Rädern durchläuft die Bürsteneinrichtung 32 einen noch geringeren Teil der Bahnkurve 106, beispielsweise noch nicht einmal bis zum Wendepunkt 108.

Bei der in Figur 11 gezeigten Radwaschvorrichtung 140 umfasst die Zustelleinrichtung 34 eine Halteeinrichtung 142 und die Verstelleinrichtung 56. Die Halteeinrichtung 142 weist ein Halteteil 144 auf, das in seiner Funktion den Halteteilen 60 bzw. 128 entspricht. Die Bürsteneinrichtung 32 und die Antriebseinrichtung 42 sind auf einander gegenüberliegenden Seiten der Halteeinrichtung 142 festgelegt.

Die Verstelleinrichtung 56 umfasst zwei Antriebseinheiten 146, 148. Die Antriebseinheit 146 ist an der Trageinrichtung 26 des Waschportals festgelegt und über ein Kopplungselement 150 mit der Antriebseinheit 148 gekoppelt. Die Antriebseinheit 148 ist über ein Kopplungselement 152 mit dem Halteteil 144 gekoppelt. Die Antriebseinheiten 146, 148 sind von der Steuereinrichtung 58 ansteuerbar.

Bei der Radwaschvorrichtung 140 kann die Bürsteneinrichtung 32 durch Betätigen der Antriebseinheiten 146, 148 zugestellt werden. Dabei besteht insbesondere die Möglichkeit, dass die Bürsteneinrichtung 32 entlang der Bahnkurve 106 mit mindestens einem Wendepunkt 108 bewegbar ist, ausgehend von der Ruhestellung in eine maximal ausgefahrene Gebrauchsstellung. Zur näheren möglichen Ausgestaltung der Bahnkurve 106 wird auf obige Ausführungen zur Radwaschvorrichtung 30 verwiesen.

Die Bewegung der Bürsteneinrichtung 32 erfolgt entlang zweier durch Doppelpfeile 154 und 156 definierten Richtungen, wobei mittels der Antriebseinheit 146 eine Bewegung in Richtung 154 und mit der Antriebseinheit 148 eine Bewegung in Richtung 156 erfolgen kann.

Die Richtungen 154, 156 sind im Winkel zueinander ausgerichtet und vorzugsweise senkrecht zueinander. Insbesondere kann die Richtung 154 senkrecht zur Aufstellfläche 14 und die Richtung 156 parallel zur Aufstellfläche 14 sein, d.h. insbesondere sind die Richtungen 154, 156 vertikal bzw. horizontal ausgerichtet.

Bei der erfindungsgemäßen Radwaschvorrichtung kann eine Zufuhrleitung 160 für eine Reinigungsflüssigkeit vorgesehen sein. Über die Zufuhrleitung 160 kann beispielsweise die Verteilungseinrichtung 48 mit Reinigungsflüssigkeit beaufschlagt werden. Am Beispiel der Radwaschvorrichtung 120 ist dargestellt, dass die Zufuhrleitung 160 vorteilhafterweise an der Halteeinrichtung 122 gehalten ist. Entsprechendes kann bei der Halteeinrichtung 54 der Radwaschvorrichtung 30 und der Halteeinrichtung 142 der Radwaschvorrichtung 140 vorgesehen sein.

### Bezugszeichen

- 10: Fahrzeugwaschanlage
- 12: Kraftfahrzeug
- 14: Aufstellfläche
- 16: Rad
- 18: Kraftfahrzeug
- 20: Rad
- 22: Träger
- 24: Querträger
- 26: Trageinrichtung
- 30: Radwaschvorrichtung
- 32: Bürsteneinrichtung
- 34: Zustelleinrichtung
- 36, 37, 38: Bürste
- 40: Bürstenträger
- 42: Antriebseinrichtung
- 44: Bürstenachse
- 46: Reinigungsborsten
- 48: Verteilungseinrichtung
- 50: Sprüharm
- 52: Düse
- 54: Halteeinrichtung
- 56: Verstelleinrichtung
- 58: Steuereinrichtung
- 60, 62: Halteteil
- 64: mittlerer Abschnitt
- 65: seitlicher Abschnitt
- 66: mittlerer Abschnitt
- 67: seitlicher Abschnitt
- 68, 70: Vorsprung
- 72: Führungseinrichtung
- 74, 76: Gelenkanordnung
- 78, 80: Scherengelenk
- 82: Scherenzug
- 84, 86, 88, 90, 92, 94: Gelenkglied
- 96: Verbindungsglied
- 98: Kolben-Zylinder-Aggregat
- 100: Kopplungsglied
- 102: Rückstellelement
- 104: Federelement
- 106: Bahnkurve
- 108: Wendepunkt
- 110: Radachse
- 120: Radwaschvorrichtung
- 122: Halteeinrichtung
- 124: Führungseinrichtung
- 126: Halterahmen
- 128, 130: Halteteil
- 132: Führungskulisse
- 134: Kulissenbahn
- 136: Führungsglied
- 140: Radwaschvorrichtung
- 142: Halteeinrichtung
- 144: Halteteil
- 146, 148: Antriebseinheit
- 150, 152: Kopplungselement
- 154, 156: Richtung
- 160: Zufuhrleitung

## Patentansprüche

1. Radwaschvorrichtung zum Reinigen eines Rades eines Kraftfahrzeuges, umfassend eine Bürsteneinrichtung (32), die mindestens eine an das Rad (16, 20) anlegbare Bürste (36, 37, 38) umfasst oder ausbildet, eine Antriebseinrichtung (42) zum drehenden Antreiben der mindestens einen Bürste (36, 37, 38) und eine Zustelleinrichtung (34), mit der die Bürsteneinrichtung (32) von einer radfernen Ruhestellung in mindestens eine radnahe Gebrauchsstellung überführbar ist, wobei die Bürsteneinrichtung (32) mittels der Zustelleinrichtung (34) bei Bewegung in Richtung auf das Rad (16, 20) absenkbar ist, **dadurch gekennzeichnet, dass** die Bürsteneinrichtung (32) mittels der Zustelleinrichtung (34) bei einer Zustellbewegung von der Ruhestellung in die mindestens eine Gebrauchsstellung entlang einer mindestens einen Wendepunkt (108) aufweisenden Bahnkurve (106) bewegbar ist und diese Bahnkurve (106) bei der Zustellbewegung durchläuft.

2. Radwaschvorrichtung nach Anspruch 1, **dadurch gekennzeichnet, dass** zumindest eines der Folgenden gilt:
- die Bürsteneinrichtung (32) ist entlang einer genau einen Wendepunkt (108) aufweisenden Bahnkurve (106) bewegbar;
- der mindestens eine Wendepunkt (108) ist in der Mitte oder im Wesentlichen in der Mitte der Bahnkurve (106) zwischen der Ruhestellung und einer bezüglich der Ruhestellung maximal ausgefahrenen Gebrauchsstellung der Bürsteneinrichtung (32) angeordnet;
- die Bürsteneinrichtung (32) ist ausgehend von der Ruhestellung bis zum mindestens einen Wendepunkt (108) und/oder ausgehend vom mindestens einen Wendepunkt (108) bis zu einer bezüglich der Ruhestellung maximal ausgefahrenen Gebrauchsstellung der Bürsteneinrichtung (32) entlang einer bogenförmigen Bahnkurve (106) bewegbar.

3. Radwaschvorrichtung nach einem der voranstehenden Ansprüche,
**dadurch gekennzeichnet, dass** die Bürsteneinrichtung (32) entlang einer in Bezug auf den mindestens einen Wendepunkt (108) im Wesentlichen punktsymmetrischen Bahnkurve (106) bewegbar ist und/oder dass die Bürsteneinrichtung (32) entlang einer ausgehend von der Ruhestellung ungefähr kosinusförmigen Bahnkurve (106) bewegbar ist.

4. Radwaschvorrichtung nach einem der voranstehenden Ansprüche,
**dadurch gekennzeichnet, dass** die Bürsteneinrichtung (32) beim Bewegen ausgehend von der Ruhestellung und/oder beim Überführen in eine bezüglich der Ruhestellung maximal ausgefahrene Gebrauchsstellung parallel oder im Wesentlichen parallel zu einer Aufstellfläche (14) für das Kraftfahrzeug (12, 18) bewegbar ist und/oder dass die Bürsteneinrichtung (32) in einer senkrecht oder im Wesentlichen senkrecht zu einer Aufstellfläche (14) für das Kraftfahrzeug (12, 18) ausgerichteten Ebene bewegbar ist.

5. Radwaschvorrichtung nach einem der voranstehenden Ansprüche,
**dadurch gekennzeichnet, dass** die Zustelleinrichtung (34) eine Halteeinrichtung (54; 122; 142) umfasst, an der die Bürsteneinrichtung (32) festgelegt ist, und eine mit der Halteeinrichtung (54; 122; 142) gekoppelte Verstelleinrichtung (56) zum Überführen der Bürsteneinrichtung (32) von der Ruhestellung in die mindestens eine Gebrauchsstellung.

6. Radwaschvorrichtung nach Anspruch 5, **dadurch gekennzeichnet, dass** die Verstelleinrichtung (56) elektrisch, mechanisch, pneumatisch und/oder hydraulisch ausgestaltet ist, insbesondere dass die Verstelleinrichtung (56) mindestens ein Kolben-Zylinder-Aggregat (98) umfasst oder ausbildet, und/oder dass die Zustelleinrichtung (34) eine Führungseinrichtung (72) umfasst zur Führung der Bewegung der Bürsteneinrichtung (32).

7. Radwaschvorrichtung nach Anspruch 6, **dadurch gekennzeichnet, dass** zumindest eines der Folgenden gilt:
- die Führungseinrichtung (72) umfasst mindestens eine Führungskulisse (132), in die mindestens ein Führungsglied (136) der Halteeinrichtung (122) eingreift und deren Verlauf die Bahnkurve (106) definiert, wobei vorzugsweise zwei im Abstand zueinander angeordnete Führungskulissen (132) vorgesehen sind, zwischen denen die Halteeinrichtung (122) angeordnet ist;
- die Halteeinrichtung (54) umfasst die Führungseinrichtung (72) oder bildet diese aus.

8. Radwaschvorrichtung nach einem der Ansprüche 5 bis 7, **dadurch gekennzeichnet, dass** die Führungseinrichtung (72) mindestens eine Gelenkanordnung (74, 76) mit relativ zueinander verschwenkbaren Gelenkgliedern (84, 86, 88, 90, 92, 94) umfasst, an denen die Bürsteneinrichtung (32) direkt oder indirekt über ein Halteteil (60) der Halteinrichtung (54) festgelegt ist, vorzugsweise dass die Gelenkanordnung (74, 76) mindestens ein Scherengelenk (78, 80) umfasst oder ausbildet, dessen Schenkel die Gelenkglieder (84, 86, 90, 92) sind.

9. Radwaschvorrichtung nach Anspruch 8, **dadurch gekennzeichnet, dass** zumindest eines der Folgenden gilt:
- es sind zwei oder mehr in Serie angeordnete Scherengelenke (78, 80) vorhanden;
- die Gelenkanordnung (74, 76) umfasst ein Gelenkglied (94), das mit einem der Schenkel und mit der Bürsteneinrichtung (32) oder dem Halteteil (60) gelenkig verbunden ist;
- die Gelenkanordnung (74, 76) umfasst ein Gelenkglied (88), das mit einem der Schenkel und mit einem Halteteil (62) der Halteeinrichtung (54) gelenkig verbunden ist, über welches die Halteeinrichtung (54) an einer Trageinrichtung (26) zum Aufstellen der Radwaschvorrichtung (30) auf einer Aufstellfläche (14) für das Kraftfahrzeug (12, 18) festgelegt ist.

10. Radwaschvorrichtung nach Anspruch 8 oder 9, **dadurch gekennzeichnet, dass** zwei im Abstand zueinander angeordnete Gelenkanordnungen (74, 76) vorgesehen sind, zwischen denen die Verstelleinrichtung (56) und/oder die Antriebseinrichtung (42) für die Bürsteneinrichtung (32) angeordnet ist, vorzugsweise dass die Gelenkanordnungen (74, 76) funktionsgleich ausgestaltet sind, wobei einander korrespondierende Gelenkglieder (84, 86, 90, 92) der Gelenkanordnungen (74, 76) durch ein Verbindungsglied (96) miteinander verbunden sind.

11. Radwaschvorrichtung nach einem der Ansprüche 8 bis 10, **dadurch gekennzeichnet, dass** die Verstelleinrichtung (56) direkt oder indirekt mit mindestens einem Gelenkglied (90) der mindestens einen Gelenkanordnung (74, 76) gekoppelt ist, vorzugsweise dass ein bügelförmiges Kopplungsglied (100) vorgesehen ist, das an Gelenkgliedern (90) der beiden Gelenkanordnungen (74, 76) angelenkt ist.

12. Radwaschvorrichtung nach einem der Ansprüche 5 bis 11, **dadurch gekennzeichnet, dass** zumindest eines der Folgenden gilt:
- die Zustelleinrichtung (34) umfasst mindestens ein entgegen der Wirkung der Verstelleinrichtung (56) wirksames Rückstellelement (102), das vorzugsweise als Federelement (104) ausgestaltet ist;
- die Verstelleinrichtung (56) weist zwei Antriebseinheiten (146, 148) auf zum Bewegen der Halteeinrichtung (142) in zwei im Winkel zueinander ausgerichteten Richtungen (154, 156), wobei die Bewegung der Bürsteneinrichtung (32) entlang der Bahnkurve (106) durch Ansteuerung der Antriebseinheiten (146, 148) steuerbar ist, wobei die Richtungen (154, 156) vorzugsweise senkrecht oder im Wesentlichen senkrecht zueinander ausgerichtet sind und die Richtungen (154, 156) insbesondere parallel und senkrecht zu einer Aufstellfläche (14) für das Kraftfahrzeug (12, 18) ausgerichtet sind;
- die Antriebseinrichtung (42) ist an der Halteeinrichtung (54; 122; 142) festgelegt.

13. Radwaschvorrichtung nach Anspruch 12, **dadurch gekennzeichnet, dass** das mindestens eine Rückstellelement (102) zwischen den Gelenkanordnungen (74, 76) angeordnet ist und/oder dass das mindestens eine Rückstellelement (102) Gelenkglieder (84, 90) der mindestens einen Gelenkanordnung (74, 76) in Richtung auf die Ruhestellung der Bürsteneinrichtung (32) relativ zueinander vorspannt.

14. Radwaschvorrichtung nach einem der voranstehenden Ansprüche,
**dadurch gekennzeichnet, dass** die Bürsteneinrichtung (32) eine Verteilungseinrichtung (48) für eine Reinigungsflüssigkeit aufweist und/oder dass an der Halteeinrichtung (54; 122; 142) eine Zufuhrleitung (160) für Reinigungsflüssigkeit gehalten ist.

15. Fahrzeugwaschanlage, insbesondere Portalwaschanlage, umfassend mindestens eine Radwaschvorrichtung (30; 120; 140) zum Reinigen eines Rades (16, 20) nach einem der voranstehenden Ansprüche.

16. Verfahren zum Reinigen eines Rades eines Kraftfahrzeuges, bei dem eine Bürsteneinrichtung, die mindestens eine an das Rad anlegbare Bürste umfasst oder ausbildet, mittels einer Zustelleinrichtung von einer radfernen Ruhestellung in eine radnahe Gebrauchsstellung überführt und dabei abgesenkt wird, wobei die Bürsteneinrichtung in einer Zustellbewegung entlang einer mindestens einen Wendepunkt aufweisenden Bahnkurve von der Ruhestellung in die Gebrauchsstellung bewegt wird.

## Claims

1. Wheel washing apparatus for cleaning a wheel of a motor vehicle, comprising a brush device (32) which comprises or forms at least one brush (36, 37, 38) that is placeable against the wheel (16, 20), a drive device (42) for rotatingly driving the at least one brush (36, 37, 38), and an advancing device (34) with which the brush device (32) is transferable from a rest position remote from the wheel into at least one use position near the wheel, wherein the brush device (32) is lowerable by means of the advancing device (34) upon moving in the direction of the wheel (16, 20), **characterized in that** the brush device (32) is moveable by means of the advancing device (34) along a trajectory (106) having at least one inflection point (108) upon an advancing movement from the rest position into the at least one use position and passes through this trajectory (106) in the advancing movement.

2. Wheel washing apparatus in accordance with Claim 1, **characterized in that** at least one of the following applies:
- the brush device (32) is moveable along a trajectory (106) having exactly one inflection point (108);
- the at least one inflection point (108) is arranged in the middle or substantially in the middle of the trajectory (106) between the rest position and a maximally extended use position of the brush device (32) in relation to the rest position;
- the brush device (32) is moveable along an arcuate trajectory (106) commencing from the rest position to the at least one inflection point (108) and/or commencing from the at least one inflection point (108) to a maximally extended use position of the brush device (32) in relation to the rest position.

3. Wheel washing apparatus in accordance with any one of the preceding Claims, **characterized in that** the brush device (32) is moveable along a trajectory (106) that is substantially point-symmetrical in relation to the at least one inflection point (108) and/or **in that** the brush device (32) is moveable along a trajectory (106) that is approximately cosine-shaped commencing from the rest position.

4. Wheel washing apparatus in accordance with any one of the preceding Claims, **characterized in that** the brush device (32) is moveable in parallel or substantially in parallel to a supporting surface (14) for the motor vehicle (12, 18) upon moving commencing from the rest position and/or upon transferring into a maximally extending use position in relation to the rest position and/or **in that** the brush device (32) is moveable in a plane oriented perpendicularly or substantially perpendicularly to a supporting surface (14) for the motor vehicle (12, 18).

5. Wheel washing apparatus in accordance with any one of the preceding Claims, **characterized in that** the advancing device (34) comprises a holding device (54; 122; 142) on which the brush device (32) is fixed, and a displacement device (56) coupled to the holding device (54; 122; 142) for transferring the brush device (32) from the rest position into the at least one use position.

6. Wheel washing apparatus in accordance with Claim 5, **characterized in that** the displacement device (56) is of electrical, mechanical, pneumatic, and/or hydraulic configuration, in particular **in that** the displacement device (56) comprises or forms at least one piston-cylinder unit (98), and/or **in that** the advancing device (34) comprises a guide device (72) for guiding the movement of the brush device (32).

7. Wheel washing apparatus in accordance with Claim 6, **characterized in that** at least one of the following applies:
- the guide device (72) comprises at least one guide rail (132) into which at least one guide member (136) of the holding device (122) engages, the course of which defines the trajectory (106), wherein preferably two guide rails (132) arranged at a distance from each other are provided, between which the holding device (122) is arranged;
- the holding device (54) comprises or forms the guide device (72).

8. Wheel washing apparatus in accordance with any one of Claims 5 to 7, **characterized in that** the guide device (72) comprises at least one joint arrangement (74, 76) with joint members (84, 86, 88, 90, 92, 94) which are pivotable relative to each other and on which the brush device (32) is fixed directly or indirectly by way of a holding part (60) of the holding device (54), preferably **in that** the joint arrangement (74, 76) comprises or forms at least one scissor joint (78, 80), the legs of which are the joint members (84, 86, 90, 92).

9. Wheel washing apparatus in accordance with Claim 8, **characterized in that** at least one of the following applies:
- two or more scissor joints (78, 80) arranged in series are present;
- the joint arrangement (74, 76) comprises a joint member (94) which is articulatedly connected to one of the legs and to the brush device (32) or the holding part (60);
- the joint arrangement (74, 76) comprises a joint member (88) which is articulatedly connected to one of the legs and to a holding part (62) of the holding device (54), by way of which holding part (62) the holding device (54) is fixed on a support device (26) for placing the wheel washing apparatus (30) on a supporting surface (14) for the motor vehicle (12, 18).

10. Wheel washing apparatus in accordance with Claim 8 or 9, **characterized in that** two joint arrangements (74, 76) arranged at a distance from each other are provided, between which the displacement device (56) and/or the drive device (42) for the brush device (32) is arranged, preferably **in that** the joint arrangements (74, 76) are of functionally identical configuration, wherein mutually corresponding joint members (84, 86, 90, 92) of the joint arrangements (74, 76) are connected to each other by a connecting member (96).

11. Wheel washing apparatus in accordance with any one of Claims 8 to 10, **characterized in that** the displacement device (56) is directly or indirectly coupled to at least one joint member (90) of the at least one joint arrangement (74, 76), preferably **in that** a bracket-shaped coupling member (100) is provided, which is articulated on joint members (90) of the two joint arrangements (74, 76).

12. Wheel washing apparatus in accordance with any one of Claims 5 to 11, **characterized in that** at least one of the following applies:
- the advancing device (34) comprises at least one restoring element (102) which acts counter to the action of the displacement device (56) and which is preferably configured as a spring element (104);
- the displacement device (56) has two drive units (146, 148) for moving the holding device (142) in two directions (154, 156) oriented at an angle to each other, wherein the movement of the brush device (32) along the trajectory (106) is controllable by controlling the drive units (146, 148), wherein the directions (154, 156) are oriented perpendicularly or substantially perpendicularly to each other, in particular **in that** the directions (154, 156) are oriented in parallel and perpendicularly to a supporting surface (14) for the motor vehicle (12, 18);
- the drive device (42) is fixed on the holding device (54; 122; 142).

13. Wheel washing apparatus in accordance with Claim 12, **characterized in that** the at least one restoring element (102) is arranged between the joint arrangements (74, 76) and/or **in that** the at least one restoring element (102) biases joint members (84, 90) of the at least one joint arrangement (74, 76) relative to each other in the direction of the rest position of the brush device (32).

14. Wheel washing apparatus in accordance with any one of the preceding Claims, **characterized in that** the brush device (32) has a distribution device (48) for a cleaning liquid and/or **in that** a supply conduit (160) for cleaning liquid is held on the holding device (54; 122; 142).

15. Vehicle washing installation, in particular gantry washing installation, comprising at least one wheel washing apparatus (30; 120; 140) for cleaning a wheel (16, 20) in accordance with any one of the preceding Claims.

16. Method for cleaning a wheel of a motor vehicle, in which a brush device, which comprises or forms at least one brush that is placeable against the wheel, is transferred by means of an advancing device from a rest position remote from the wheel into a use position near the wheel, and is thereby lowered, wherein the brush device is moved in an advancing movement along a trajectory having at least one inflection point from the rest position into the use position.

## Revendications

1. Dispositif de lavage de roue pour nettoyer une roue d'un véhicule à moteur, comprenant un système de brosse (32), qui comprend ou forme au moins une brosse (36, 37, 38) pouvant être placée sur la roue (16, 20), un système d'entraînement (42) pour l'entraînement en rotation de l'au moins une brosse (36, 37, 38) et un système d'avance (34), avec lequel le système de brosse (32) peut être amené d'une position de repos éloignée de la roue dans au moins une position d'utilisation proche de la roue, dans lequel le système de brosse (32) peut être abaissé au moyen du système d'avance (34) lors d'un mouvement en direction de la roue (16, 20), **caractérisé en ce que** le système de brosse (32) est mobile au moyen du système d'avance (34) lors d'un mouvement d'avance de la position de repos dans l'au moins une position d'utilisation le long d'une trajectoire (106) présentant au moins un point d'inflexion (108) et parcourt cette trajectoire (106) lors du mouvement d'avance.

2. Dispositif de lavage de roue selon la revendication 1, **caractérisé en ce qu'**au moins un de ce qui suit s'applique :
- le système de brosse (32) est mobile le long d'une trajectoire (106) présentant précisément un point d'inflexion (108) ;
- l'au moins un point d'inflexion (108) est disposé au centre ou sensiblement au centre de la trajectoire (106) entre la position de repos et une position d'utilisation du système de brosse (32) sortie au maximum par rapport à la position de repos ;
- le système de brosse (32) est mobile à partir de la position de repos jusqu'à au moins un point d'inflexion (108) et/ou à partir d'au moins un point d'inflexion (108) jusqu'à une position d'utilisation du système de brosse (32) sortie au maximum par rapport à la position de repos le long d'une trajectoire (106) arquée.

3. Dispositif de lavage de roue selon l'une quelconque des revendications précédentes, **caractérisé en ce que** le système de brosse (32) est mobile le long d'une trajectoire (106) sensiblement à symétrie ponctuelle par rapport à l'au moins un point d'inflexion (108) et/ou que le système de brosse (32) est mobile le long d'une trajectoire (106) à peu près cosinusoïdale à partir de la position de repos.

4. Dispositif de lavage de roue selon l'une quelconque des revendications précédentes, **caractérisé en ce que** le système de brosse (32) lors du mouvement à partir de la position de repos et/ou lors de l'amenée dans une position d'utilisation sortie au maximum par rapport à la position de repos est mobile parallèlement ou sensiblement parallèlement à une surface de pose (14) pour le véhicule à moteur (12, 18) et/ou que le système de brosse (32) est mobile dans un plan orienté perpendiculairement ou sensiblement perpendiculairement à une surface de pose (14) pour le véhicule à moteur (12, 18).

5. Dispositif de lavage de roue selon l'une quelconque des revendications précédentes, **caractérisé en ce que** le système d'avance (34) comprend un système de retenue (54 ; 122 ; 142), sur lequel le système de brosse (32) est fixé, et un système de déplacement (56) accouplé au système de retenue (54 ; 122 ; 142) pour amener le système de brosse (32) de la position de repos dans l'au moins une position d'utilisation.

6. Dispositif de lavage de roue selon la revendication 5, **caractérisé en ce que** le système de déplacement (56) est conçu de manière électrique, mécanique, pneumatique et/ou hydraulique, en particulier que le système de déplacement (56) comprend ou réalise au moins un groupe à piston-cylindre (98), et/ou que le système d'avance (34) comprend un système de guidage (72) pour le guidage du mouvement du système de brosse (32).

7. Dispositif de lavage de roue selon la revendication 6, **caractérisé en ce qu'**au moins un de ce qui suit s'applique :
- le système de guidage (72) comprend au moins une coulisse de guidage (132), dans laquelle s'insère au moins un organe de guidage (136) du système de retenue (122) et dont le tracé définit la trajectoire (106), dans lequel de préférence deux coulisses de guidage (132) disposées à distance l'une de l'autre sont prévues, entre lesquelles le système de retenue (122) est disposé ;
- le système de retenue (54) comprend le système de guidage (72) ou réalise celui-ci.

8. Dispositif de lavage de roue selon l'une quelconque des revendications 5 à 7, **caractérisé en ce que** le système de guidage (72) comprend au moins un ensemble d'articulation (74, 76) avec des organes d'articulation (84, 86, 88, 90, 92, 94) pouvant pivoter les uns par rapport aux autres, sur lesquels le système de brosse (32) est fixé directement ou indirectement par l'intermédiaire d'une pièce de retenue (60) du système de retenue (54), de préférence que l'ensemble d'articulation (74, 76) comprend ou réalise au moins une articulation à ciseaux (78, 80), dont les branches sont les organes d'articulation (84, 86, 90, 92).

9. Dispositif de lavage de roue selon la revendication 8, **caractérisé en ce qu'**au moins un de ce qui suit s'applique :
- deux articulations à ciseaux (78, 80) ou plus disposées en série sont présentes ;
- l'ensemble d'articulation (74, 76) comprend un organe d'articulation (94), qui est relié de manière articulée à l'une des branches et au système de brosse (32) ou à la pièce de retenue (60) ;
- l'ensemble d'articulation (74, 76) comprend un organe d'articulation (88), qui est relié de manière articulée à l'une des branches et à une pièce de retenue (62) du système de retenue (54), par l'intermédiaire duquel le système de retenue (54) est fixé à un système de support (26) pour la pose du dispositif de lavage de roue (30) sur une surface de pose (14) pour le véhicule à moteur (12, 18).

10. Dispositif de lavage de roue selon la revendication 8 ou 9, **caractérisé en ce que** deux ensembles d'articulation (74, 76) disposés à distance l'un de l'autre sont prévus, entre lesquels le système de déplacement (56) et/ou le système d'entraînement (42) pour le système de brosse (32) est disposé, de préférence que les ensembles d'articulation (74, 76) sont conçus avec une fonction équivalente, dans lequel des organes d'articulation (84, 86, 90, 92) correspondant les uns aux autres des ensembles d'articulation (74, 76) sont reliés les uns aux autres par un organe de liaison (96).

11. Dispositif de lavage de roue selon l'une quelconque des revendications 8 à 10, **caractérisé en ce que** le système de déplacement (56) est accouplé directement ou indirectement à au moins un organe d'articulation (90) de l'au moins un ensemble d'articulation (74, 76), de préférence qu'un organe d'accouplement (100) en forme d'étrier est prévu, qui est fixé par articulation sur des organes d'articulation (90) des deux ensembles d'articulation (74, 76).

12. Dispositif de lavage de roue selon l'une quelconque des revendications 5 à 11, **caractérisé en ce qu'**au moins un de ce qui suit s'applique :
- le système d'avance (34) comprend au moins un élément de rappel (102) agissant à l'encontre de l'action du système de déplacement (56), qui est conçu de préférence sous la forme d'un élément ressort (104) ;
- le système de déplacement (56) présente deux unités d'entraînement (146, 148) pour le mouvement du système de retenue (142) dans deux directions (154, 156) orientées à un angle l'une par rapport à l'autre, dans lequel le mouvement du système de brosse (32) le long de la trajectoire (106) peut être commandé par commande des unités d'entraînement (146, 148), dans lequel les directions (154, 156) sont orientées de préférence perpendiculairement ou sensiblement perpendiculairement l'une à l'autre et les directions (154, 156) sont orientées en particulier parallèlement et perpendiculairement à une surface de pose (14) pour le véhicule à moteur (12, 18) ;
- le système d'entraînement (42) est fixé sur le système de retenue (54 ; 122 ; 142).

13. Dispositif de lavage de roue selon la revendication 12, **caractérisé en ce que** l'au moins un élément de rappel (102) est disposé entre les ensembles d'articulation (74, 76) et/ou que l'au moins un élément de rappel (102) précontraint des organes d'articulation (84, 90) de l'au moins un ensemble d'articulation (74, 76) l'un par rapport à l'autre en direction de la position de repos du système de brosse (32).

14. Dispositif de lavage de roue selon l'une quelconque des revendications précédentes, **caractérisé en ce que** le système de brosse (32) présente un système de répartition (48) pour un liquide de nettoyage et/ou qu'une conduite d'amenée (160) pour un liquide de nettoyage est retenue sur le système de retenue (54 ; 122 ; 142).

15. Installation de lavage de véhicule, en particulier installation de lavage à portique, comprenant au moins un dispositif de lavage de roue (30 ; 120 ; 140) pour le nettoyage d'une roue (16, 20) selon l'une quelconque des revendications précédentes.

16. Procédé pour nettoyer une roue d'un véhicule à moteur, selon lequel un système de brosse, qui comprend ou réalise au moins une brosse pouvant être placée sur la roue, est amené au moyen d'un système d'avance d'une position de repos éloignée de la roue dans une position d'utilisation proche de la roue et ce faisant abaissé, dans lequel le système de brosse est déplacé dans un mouvement d'avance le long d'une trajectoire présentant au moins un point d'inflexion de la position de repos dans la position d'utilisation.
